# EUROPÄISCHE PATENTANMELDUNG

(11) **EP 2 445 091 A2**
(43) Veröffentlichungstag der Anmeldung: **25.04.2012**
(21) Anmeldenummer: 11181856.3
(22) Anmeldetag: 19.09.2011
(51) Int. Cl.: H02K 15/09

(54) **Rotor mit maximalem Kupferfüllfaktor**

(30) Priorität: 20.10.2010 DE 102010042651
(71) Anmelder: Robert Bosch GmbH, 70442 Stuttgart (DE)
(72) Erfinder: Herp, Juergen, 77815 Buehl (DE); Lauk, Detlef, 77871 Renchen (DE)

(57) **Zusammenfassung**

Die vorliegende Erfindung betrifft Verfahren zum Herstellen der Wicklung eines Rotors für eine elektrische Maschine, der Nuten aufweist, in denen Leiterschleifen der Wicklung angeordnet sind, die Spulen ausbilden, wobei das Bewickeln der Nuten mit den Leiterschleifen so ausgeführt wird, dass die Anzahl der Leiterschleifen der zuletzt gewickelten Spule kleiner oder gleich einer durchschnittlichen Anzahl der Leiterschleifen aller bewickelten Spulen des Rotors ist.

## Beschreibung

### Stand der Technik

Die vorliegende Erfindung betrifft einen Rotor für eine elektrische Maschine, der Nuten aufweist, in denen Leiterschleifen angeordnet sind, die Spulen ausbilden, und der Kommutatorlamellen eines Kommutators aufweist, die zum Beaufschlagen der Spulen mit einem elektrischen Strom mit diesen elektrisch verbunden sind, wobei die Anzahl der Leiterschleifen pro Nut variabel gewählt ist. Die vorliegende Erfindung betrifft weiterhin ein Verfahren zum Herstellen der Wicklung des Rotors.

Herkömmlich weisen elektrische Maschinen einen Rotor mit Spulen auf, die alle dieselbe Anzahl Leiterschleifen aufweisen. Um sensorlos ein Drehzahlsignal zu erzeugen, ist es aus der Druckschrift DE 10 2007 036 253 A1 weiterhin bekannt, einen Rotor gezielt mit unterschiedlichen Anzahlen Leiterschleifen pro Nut zu bewickeln. Das sensorlose Erfassen der Drehzahl hat den Vorteil, dass auf verschiedene Bauteile wie Sensorelemente und Hallschalter verzichtet werden kann.

Es hat sich jedoch gezeigt, dass ein Rotor für sensorlose Drehzahlmessung mit unterschiedlicher Anzahl Leiterschleifen pro Nut, nicht auf herkömmliche Art und Weise wickelbar ist, da er Spulen umfasst, die eine höhere Anzahl Leiterschleifen aufweisen, als ein Vergleichsrotor mit derselben Anzahl Spulen, die alle dieselbe Leiterschleifenanzahl aufweisen, so dass der zwischen den Polen des Rotors zur Verfügung stehende Nutraum für den Rotor für sensorlose Drehzahlmessung nicht ausreicht.

### Offenbarung der Erfindung

Aufgabe der Erfindung ist es, einen Rotor für eine elektrische Maschine sowie ein Verfahren zur Herstellung seiner Wicklung zu schaffen, wobei der Rotor Spulen mit einer unterschiedlichen Anzahl Leiterschleifen pro Spule aufweist und dennoch dieselbe Baugröße aufweist, wie ein Vergleichsrotor mit derselben Anzahl Spulen, die alle dieselbe Anzahl Leiterschleifen pro Spule aufweisen.

Die Aufgabe wird gelöst mit einem Verfahren zum Herstellen eines Rotors für eine elektrische Maschine, der Nuten aufweist, in denen Leiterschleifen angeordnet sind, die Spulen ausbilden, wobei die Anzahl der Leiterschleifen pro Nut variabel gewählt ist, wobei das Bewickeln der Nuten mit den Leiterschleifen so ausgeführt wird, dass die Anzahl der Leiterschleifen der zuletzt gewickelten Spule kleiner oder gleich einer durchschnittlichen Anzahl der Leiterschleifen aller bewickelten Spulen des Rotors ist.

Es hat sich gezeigt, dass ein Rotor mit unterschiedlicher Anzahl Leiterschleifen pro Nut herstellbar ist, der dieselbe Baugröße aufweist, insbesondere dasselbe Gewicht und einen identischen Bauraum einnimmt, wie ein Vergleichsrotor mit derselben Anzahl Spulen und derselben Anzahl Leiterschleifen pro Nut, indem die zuletzt gewickelte Spule die durchschnittliche Anzahl der Leiterschleifen aller bewickelten Spulen nicht überschreitet. Bevorzugt weist die zuletzt gewickelte Spule jedoch die kleinste Anzahl Leiterschleifen der Spulen des Rotors auf.

Es ist weiterhin bevorzugt, dass sich die Reihenfolge, in der die Spulen gewickelt werden, nicht ändert.

Der erfindungsgemäß gewickelte Rotor weist denselben Kupferfüllfaktor auf, wie ein Vergleichsrotor mit derselben Anzahl Spulen, die alle dieselbe Anzahl Leiterschleifen pro Spule aufweisen, wobei die Anzahl Leiterschleifen pro Spule der durchschnittlichen Anzahl der Leiterschleifen des erfindungsgemäßen Rotors entspricht. Der erfindungsgemäß gewickelte Rotor ist außerdem für dieselben Herstellungskosten fertigbar, oder aufgrund der nicht benötigten Sensorbauteile sogar kostengünstiger. Im Vergleich zu einem herkömmlich bewickelten Rotor für sensorlose Drehzahlmessung mit unterschiedlicher Anzahl Leiterschleifen pro Spule und derselben Anzahl Spulen ist der erfindungsgemäß gewickelte Rotor kürzer und somit kostengünstiger herstellbar.

Die Aufgabe wird weiterhin gelöst mit einem Rotor, der nach dem erfindungsgemäßen Verfahren hergestellt ist. Der Rotor weist Nuten auf, in denen Leiterschleifen angeordnet sind, die Spulen ausbilden. Er hat den Vorteil, dass er denselben Kupferfüllfaktor aufweist, wie ein Vergleichsrotor mit derselben Anzahl Spulen, wobei die Anzahl der Leiterschleifen der Spulen des Vergleichsrotors gleich der durchschnittlichen Anzahl der Leiterschleifen aller bewickelten Spulen des Rotors ist.

Bevorzugt weist der Rotor außerdem Kommutatorlamellen eines Kommutators auf, die zum Beaufschlagen der Spulen mit einem elektrischen Strom mit diesen elektrisch leitend verbunden sind. Dabei ist die Anzahl der Leiterschleifen pro Nut erfindungsgemäß variabel gewählt.

Es ist außerdem bevorzugt, dass die Abfolge der Anzahl der Leiterschleifen der Spulen des Rotors in der Reihenfolge ihrer Kommutierung näherungsweise eine Sinusfunktion darstellt. Denn ein mit einem solchen Rotor erzeugtes Motorstromsignal ist mit einer Auswerteeinheit so auswertbar, dass aus dem Motorstromsignal die Drehzahl sowie die Drehposition des Rotors bestimmbar sind.

Die Aufgabe wird weiterhin gelöst mit einer elektrischen Maschine mit einem solchen Rotor. Die elektrische Maschine ist bevorzugt ein Elektromotor, der einen Stator und einen Rotor aufweist. Besonders bevorzugt ist der Elektromotor ein Stellmotor zum Verstellen von Teilen, insbesondere eines Kraftfahrzeugs, beispielsweise von Fensterscheiben oder Sitzen.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt tabellarisch einen Vergleich verschiedener Rotoren, die nicht mit dem erfindungsgemäßen Verfahren bewickelt sind, mit einem Rotor, der nach dem erfindungsgemäßen Verfahren bewickelt ist,
- **Fig. 2**: zeigt einen Rotor, der nach dem erfindungsgemäßen Verfahren bewickelt ist.

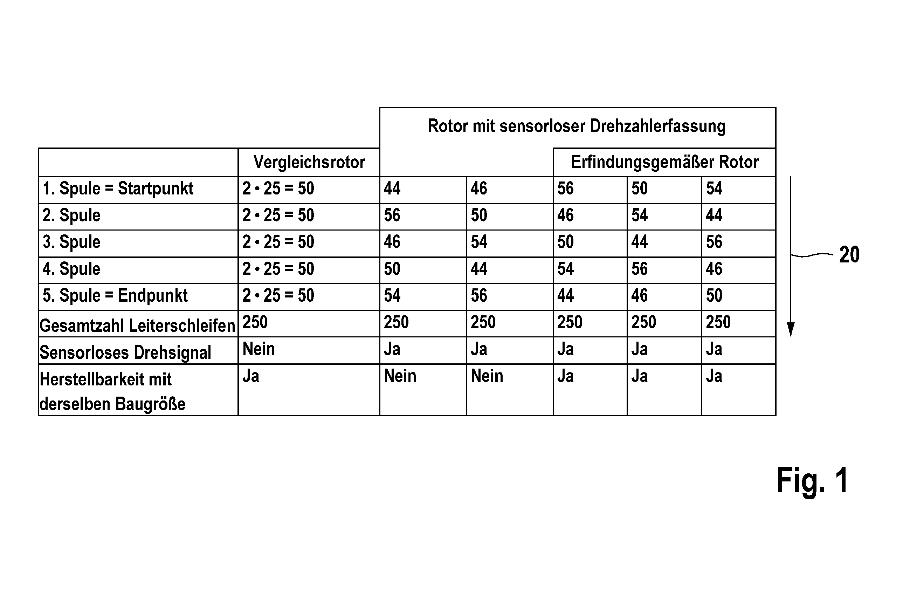

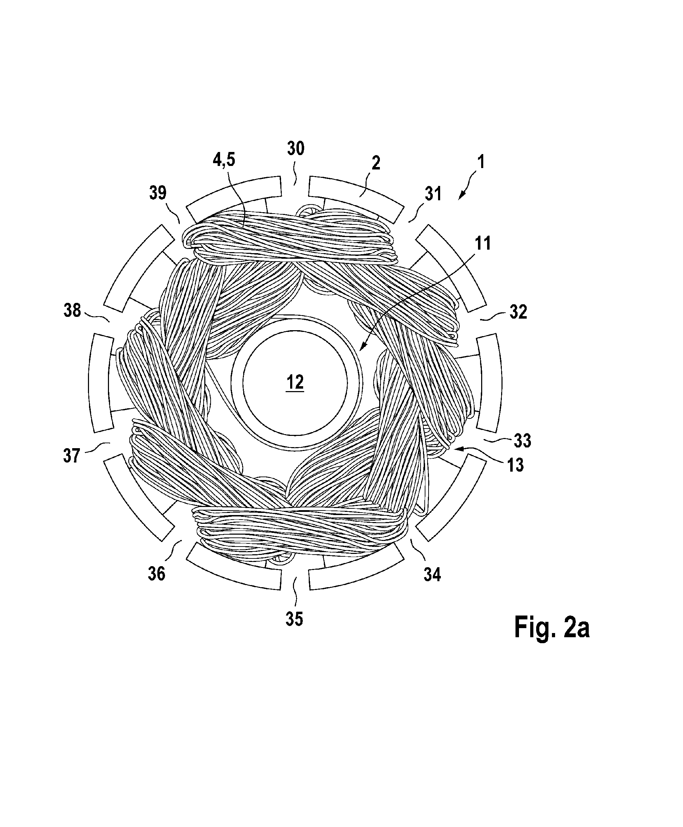

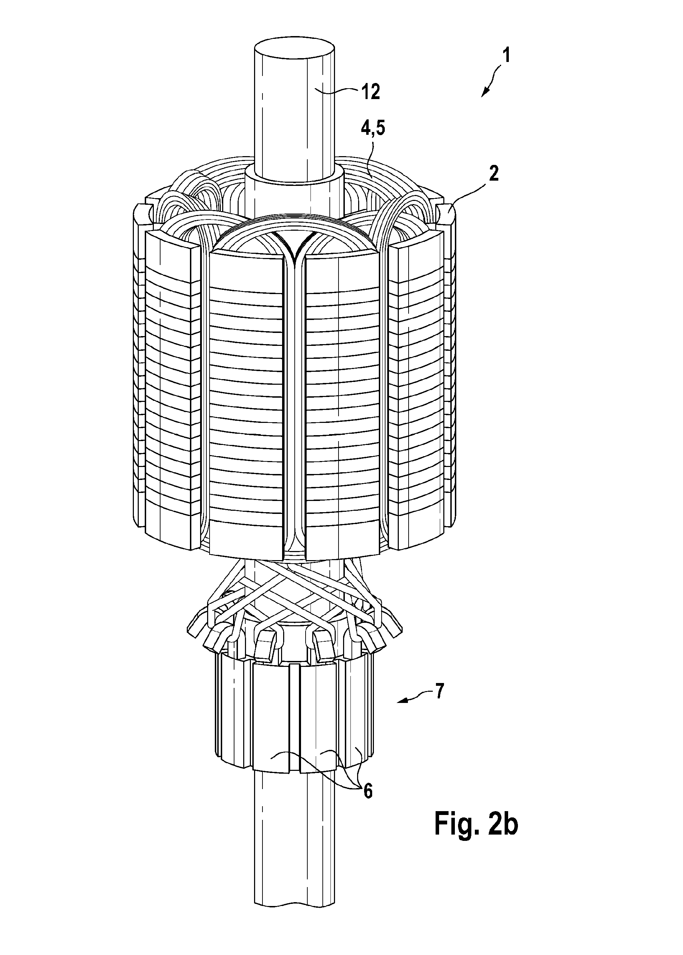

**Fig. 1** zeigt tabellarisch einen Vergleich eines Vergleichsrotors (nicht dargestellt) sowie eines herkömmlichen Rotors (nicht dargestellt) für sensorlose Drehzahlmessung, die nicht mit dem erfindungsgemäßen Verfahren bewickelt sind, mit einem Rotor 1 (s. **Fig. 2**), der nach dem erfindungsgemäßen Verfahren bewickelt ist.

Der Vergleichsrotor sowie der Rotor für sensorlose Drehzahlmessung weisen beide dieselbe Anzahl Spulen 4 und dieselbe Anzahl Nuten 30, 31 - 3i auf, wie der erfindungsgemäß bewickelte Rotor 1. Außerdem ist die Anzahl der Leiterschleifen 5 pro Nut 30, 31 - 3i des Vergleichsrotors gleich der durchschnittlichen Anzahl der Leiterschleifen 5 aller Spulen 4 sowohl des Rotors für sensorlose Drehzahlmessung als auch des erfindungsgemäß bewickelten Rotors 1. Daher ist die Gesamtzahl aller Leiterschleifen 5 jeder der drei Rotoren 1 gleich, so dass der Kupferfüllfaktor der Rotoren 1 gleich ist.

Der Vergleichsrotor sowie der erfindungsgemäß bewickelte Rotor 1 nehmen au-βerdem auch denselben Bauraum ein und weisen dasselbe Gewicht auf. Im Vergleich dazu müsste die fehlende Kupfermenge eines herkömmlichen Rotors durch zusätzliche Baulänge und daher mit größerem Gewicht und höheren Kosten kompensiert werden.

Die hier gewählten Rotoren 1 weisen zehn Nuten 30, 31 - 3i auf, die mit fünf Spulen 4, die hier als Doppelspulen ausgebildet sind, bewickelt sind. Eine Doppelspule ist aus zwei Wickelsträngen gebildet.

Beim Vergleichsrotor ist jede Spule 4 aus insgesamt fünfzig Leiterschleifen 5 gewickelt, die jeweils aus zwei Wickelsträngen mit jeweils fünfundzwanzig Leiterschleifen 5 bestehen.

Der herkömmliche Rotor für sensorlose Drehzahlmessung weist zwar dieselbe Gesamtzahl Leiterschleifen 5 auf, nämlich zweihundertfünfzig Leiterschleifen 5. Aber die Anzahl der Leiterschleifen 5 pro Spule 4 variiert, so dass bei einer minimalen Anzahl von vierundvierzig Leiterschleifen 5 der kleinsten Spule 4 die größte Spule 4 sechsundfünfzig Leiterschleifen 5 aufweist.

Der erfindungsgemäß bewickelte Rotor 1 weist Spulen 4 mit der gleichen Anzahl Leiterschleifen 5 pro Spule 4 auf, wie der herkömmliche Rotor für sensorlose Drehzahlmessung. Jedoch ist der Startpunkt beim Bewickeln des Rotors 1 so gewählt, dass die zuletzt gewickelte Spule 4 eine Leiterzahl 5 aufweist, deren Anzahl Leiterschleifen 5 kleiner oder gleich der durchschnittlichen Anzahl der Leiterschleifen 5 aller Spulen 4 ist, und deren Anzahl Leiterschleifen 5 daher der Anzahl Leiterschleifen 5 pro Spule 4 des Vergleichsrotors entspricht. Die Anzahl der Leiterschleifen 5 pro Spule 4 der zuletzt gewickelten Spule 4 ist bevorzugt möglichst klein, so dass es besonders bevorzugt ist, die kleinste Spule 4 zuletzt zu bewickeln.

Im Vergleich zu einem Rotor für sensorlose Drehzahlmessung ändert sich die Reihenfolge, in der die Spulen 4 gewickelt werden, bevorzugt nicht. Sondern es ist bevorzugt, lediglich den Endpunkt beziehungsweise den Startpunkt zu verändern. Die Wickelreihenfolge der Spulen 4 ist in der Tabelle mit einem Pfeil 20 gekennzeichnet.

**Fig. 2** zeigt einen Rotor 1, der sich entlang einer Welle 12 erstreckt, und der nach dem erfindungsgemäßen Verfahren bewickelt ist. Und zwar zeigt die **Fig. 2a** die Strinseite des Rotors 1 und die **Fig. 2b** eine Seitenansicht. Der Rotor 1 weist zehn Pole 2 auf, zwischen denen zehn Nuten 30, 31 - 3i angeordnet sind. In die Nuten 30, 31 - 3i sind Spulen 4 gewickelt, die eine unterschiedliche Anzahl Leiterschleifen 5 pro Spule 4 aufweisen. Um den Rotor 1 mit einem Stromsignal zu beaufschlagen, sind die Spulen 4 mit Kommutatorlamellen 6 eines Kommutators 7 elektrisch leitend verbunden.

Der Rotor 1 weist eine Stirnseite 11 auf, über die sich die Leiterschleifen 5 von einer Nut 30, 31 - 3i des Rotors 1 zu einer anderen Nut 30, 31 - 3i des Rotors 1 erstrecken. Dabei wird als andere Nut 30, 31 - 3i nicht die der einen Nut 30, 31 - 3i unmittelbar benachbarte Nut 30, 31 - 3i bewickelt, sondern aus elektromagnetischen Gründen eine von der einen Nut 30, 31 - 3i entfernte Nut 30, 31 - 3i. Im vorliegenden Ausführungsbeispiel erstrecken sich die Spulen 4 jeweils von der einen Nut 30, 31 - 3i in die übernächste andere Nut 30, 31 - 3i.

Dabei überdecken die Leiterschleifen 5 der von der einen Nut 30, 31 - 3i zur übernächsten anderen Nut 30, 31 - 3i gewickelten Spule 4 eine Nutöffnung 13 der benachbarten Nut 30, 31 - 3i teilweise.

Indem der Endpunkt beziehungsweise der Startpunkt der gewickelten Spulen 4 so gewählt wird, dass die zuletzt gewickelte Spule 4 möglichst klein ist und die Anzahl der durchschnittlichen Leiterschleifen 5 aller Spule 4 nicht übersteigt, sind die Nutöffnungen 13 für die zuletzt gewickelte Spule 4 trotz der teilweise größeren Leiterzahl 5 pro Spule 4 bei gleichem zur Verfügung stehendem Nutraum im Vergleich zu einem Vergleichsrotor (nicht dargestellt) groß genug, um die zuletzt gewickelte Spule 4 wickeln zu können, da die benachbarten Spulen 4 aufgrund ihrer geringeren Anzahl Leiterschleifen 5 entsprechend kleiner sind.

## Patentansprüche

1. Verfahren zum Herstellen einer Wicklung eines Rotors (1) für eine elektrische Maschine, der Nuten (30, 31 - 3i) aufweist, in denen Leiterschleifen (5) der Wicklung angeordnet sind, die Spulen (4) ausbilden, wobei die Anzahl der Leiterschleifen (5) pro Nut (30, 31 - 3i) variabel gewählt ist,
**dadurch gekennzeichnet, dass**
das Bewickeln der Nuten (30, 31 - 3i) mit den Leiterschleifen (5) so ausgeführt wird, dass die Anzahl der Leiterschleifen (5) der zuletzt gewickelten Spule (4) kleiner oder gleich einer durchschnittlichen Anzahl der Leiterschleifen (30, 31 - 3i) aller bewickelten Spulen (4) des Rotors (1) ist.

2. Verfahren nach Anspruch 1, **dadurch gekennzeichnet, dass** die Spule (4) mit der kleinsten Anzahl Leiterschleifen (30, 31 - 3i) zuletzt gewickelt wird.

3. Verfahren nach einem der vorherigen Ansprüche, **dadurch gekennzeichnet, dass** sich die Reihenfolge, in der die Spulen (4) gewickelt werden, nicht ändert.

4. Rotor (1) für eine elektrische Maschine, hergestellt nach dem Verfahren des Anspruchs 1.

5. Rotor (1) nach Anspruch 2, **dadurch gekennzeichnet, dass** die Abfolge der Anzahl der Leiterschleifen (30, 31 - 3i) der Spulen (4) des Rotors (1) in der Reihenfolge ihrer Kommutierung näherungsweise eine Sinusfunktion darstellt.

6. Elektrische Maschine mit einem Rotor (1) nach einem der Ansprüche 2 oder 3.
